# EUROPEAN PATENT SPECIFICATION

(11) **EP 1 082 178 B1**
(45) Date of publication and mention of the grant of the patent: **08.10.2003**
(21) Application number: 99918011.0
(22) Date of filing: 28.04.1999
(51) Int. Cl.: B05D 1/04, B24B 13/00, B29D 31/00, B29C 41/08

(54) **METHOD AND APPARATUS FOR ELECTRICALLY CONTROLLING A FLOW OF MATERIAL**
VERFAHREN UND VORRICHTUNG ZUR STEUERUNG EINES MATERIALFLUSSES
PROCEDE ET APPAREIL DE REGULATION D'UN FLUX DE MATERIAU

(30) Priority: 15.05.1998 FI 981082
(43) Date of publication of application: 14.03.2001
(73) Proprietor: Hatjasalo, Leo, 00210 Helsinki (FI); Valtanen, Jarkko, 00100 Helsinki (FI)
(72) Inventor: Hatjasalo, Leo, 00210 Helsinki (FI); Valtanen, Jarkko, 00100 Helsinki (FI)
(74) Representative: Kangasmäki, Reijo Holger
(86) International application number: PCT/FI99/00341
(87) International publication number: WO 99/059735

(56) References cited:
- EP-A2- 0 541 230
- EP-A2- 0 623 782
- US-A- 3 930 061

## Description

The present invention relates to a method and an apparatus for electrically controlling a flow of material, wherein a single- or multi-component, essentially polymer-based material, such as plastics, elastomer or the like, is charged electrically and sprayed in an electrical field to a three-dimensional mould/target.

At present, it is conventional to employ so-called electrostatic coating e.g. in automotive painting. This application is generally carried out by using metal-based coating materials, whose electrical charge and spraying in an electrical field can be achieved in the discussed application in a sufficiently homogeneous manner, such that the automobile is provided all over with a sufficiently thick layer of paint. However, the above type processing is inconvenient to carry out in practice with a sufficient reliability, especially when used in connection with plastic-based materials because of a poor applicability of this type of materials to the discussed processing. On the other hand, it is perfectly well known to provide the plastics to be sprayed with an electrical charge by using suitable polarity/resistivity regulating materials, such as chlorine-/glycol-based materials or the like. Despite this, however, this type of electrical processing of a plastic material has not been possible to perform thus far with a sufficient reliability, which is why e.g. conventional thin-walled ordinary articles, such as gloves condoms or the like, must still be manufactured largely by using a traditional dip process.

On the other hand, the International patent publication WO 94/22594 discloses a process for coating especially objects with varying shapes, which is based on the fact that a multi-component material, one comprising a cold curing and inert, e.g. solvent-free resin, is electrostatically applied to a surface of an object, whereafter at least one fluid material is sprayed onto the resin before it has cured.

The cited publication does not present any concrete solution for performing the above-described task, as it mostly discloses various alternative working principles for providing a coating. On the basis of technology described in the cited publication, it is not possible in practice to make sure that especially a flow of resin-based, electrically processible material be applied particularly to a multi-dimensionally shaped article in such a way that each area/point of the article would be provided exactly with a desired material thickness, which thus remains to be a central problem, especially in terms of processing resin- or plastic-based materials electrically.

An object of this intention is to provide a decisive remedy for the above-described problems and hence to raise substantially the available prior art. In order to achieve this object, a method of the invention is principally characterized in that the method makes use of a mould/target set at an electric potential, which is provided with two or more treatment blocks to be set at voltage levels different from each other, especially for coordinating the courses of sprayed material particles and the electrical field affecting the same, in such a manner that a material layer of desirable thickness is formed on each section/area of the mould/target surface in a spraying cycle II.

The method of the invention offers some major advantages, including e.g. its technical functionality and applicability, by virtue of which it is practically for the first time possible to provide a sufficiently reliable result in most diverse applications, even when using a plastic-based manufacturing material in connection with the above type of electrical processing. Usefulness of the method is based on the fact that a mould of the invention, by virtue of mathematically determined unequal voltage levels in the treatment blocks included therein, enables a precise determination of material thickness in such a way that the end result of actual processing is exactly as desired. The method of the invention also makes it possible that a target to be processed, such as an object to be coated or an article to be manufactured therefrom, be intentionally provided in desired areas with substantially unequal wall thicknesses. Furthermore, it is basically possible to apply the method in a traditional fashion, e.g. electrostatically, such that the predetermined voltage levels in the various processing blocks of a mould are kept essentially constant through the entire spraying cycle. On the other hand, it is also possible in this context to make use of a dynamically controlled spraying process in such a manner that one or several process parameters are changed continuously or periodically during a spraying cycle.

Preferred applications for the method of the invention are set forth in the non-independent claims directed to a method.

The invention relates also to an apparatus operating in accordance with the method, which is defined in more detail in the preamble of the independent claim directed to the same. The principally characterizing features of the apparatus are set forth in the characterizing clause of said claim.

The most important advantages offered by the apparatus of the invention include technical reliability in its operation and function as well as usefulness for the most diverse applications. First of all, the fundamental concept of the apparatus of the invention lies in the fact that a control unit included therein enables the setting of separate processing blocks included in a mould at e.g. mathematically predetermined voltage levels, such that the actual spraying process is capable of producing an absolutely controlled flow of material to each surface/wall of a mould/target to be treated/manufactured at a given time. Depending on the nature of a process, it is possible to arrange the control unit, e.g. according to a basically traditional approach, to operate so-called electrostatically in such a way that the predetermined voltage levels in the separate treatment blocks of a mould are substantially constant through the entire spraying cycle. On the other hand, it is also possible to make the control unit dynamical, such that certain process parameters are changed continuously or by way of an on/off principle during the course of spraying. Another essential benefit gained by the apparatus of the invention is that, even when processing a multi-component material, it is possible to use just one spraying cycle to achieve a completely finished end result, which, thus, does not necessarily require any kind of finishing operations when using properly blended process materials, regarding e.g. colouring or other mechanical/physical characteristics, such as surface tension, surface strength or the like.

Preferred embodiments for the apparatus of the invention are set forth in the non-independent claims directed to an apparatus.

In the following specification, the invention will be described in more detail with reference made to the accompanying drawings, in which
- fig. 1: shows the operating principle for a method and an apparatus of the invention, and
- fig. 2: shows by way of example a mould useful in connection with a method and an apparatus of the invention.

The invention relates to a method for electrically controlling a flow of material, wherein a single- or multi-component, essentially polymer-based material 1, such as plastics, elastomer or the like, is charged electrically I and sprayed II in an electrical field E to a three-dimensional mould 2/target 3. The method of the invention makes use of the mould 2/target 3 set at an electric potential, which is provided with two or more treatment blocks Li to be set at voltage levels different from each other, especially for coordinating the courses of sprayed material particles and the electrical field E affecting the same, in such a manner that a material layer of desirable thickness is formed on each section/area of the mould/target surface in the spraying cycle II.

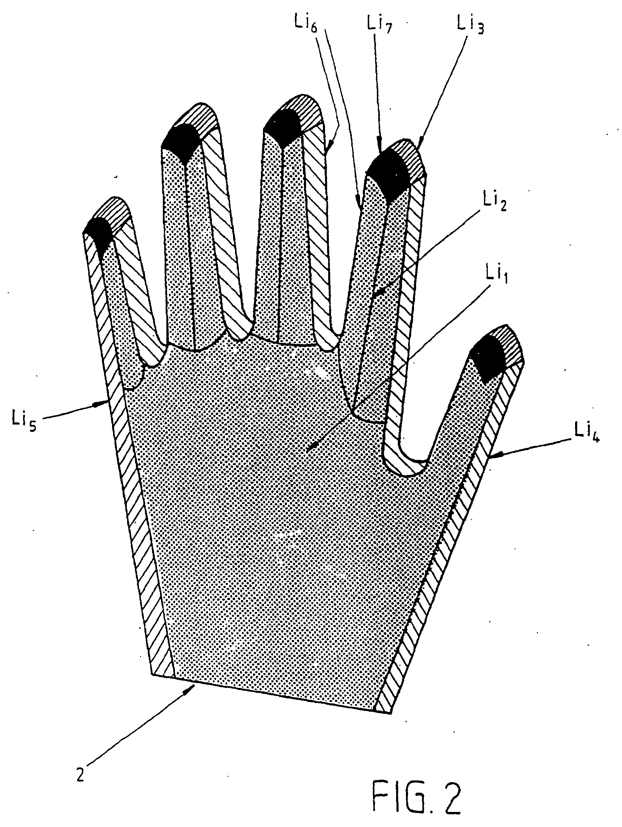

First of all, the method of the invention is based on the fact that a given target to be processed, e.g. a glove as depicted in fig. 2, is previously modelled and this is used as a basis for determining calculated or so-called tabulated optimal voltage levels for each critical point/area of a target, such that the unequal voltage levels established in these areas serve either to boost or suppress the electrical field during the actual spraying II for a controlled management of the flows of material. The above features can be quite simply compiled in each treatment block by means of appropriately arranged wires or the like electrically conducting surfaces.

In a preferred application of the method, the treatment is performed in a static electrical field, such that the predetermined unequal voltage levels of separate treatment blocks Li₁ - Li₇, in the mould 2/target 3 are maintained substantially constant through the entire spraying cycle.

Furthermore, in a preferred alternative application, the treatment is carried out in a dynamic electrical field by changing, during the course of spraying II, one or several process parameters, such as the volume flow, viscosity, and/or the like of a flow of material to be sprayed. In practice, however, the easiest approach is probably to change the electrical field E, such as the charge of a material to be sprayed and/or voltage levels of the mould 2/target 3. Furthermore, it is possible to change the voltage level of the treatment blocks Li during the course of spraying II dynamically within the limits of predetermined minimum and maximum voltage levels. Thus, in this context, it is possible to change e.g. the voltage level of a given treatment block Li in the mould continuously during the course of spraying or else by an on/off principle only. In a further preferred application of the method, it is possible to achieve the control of material particles to be sprayed by using mechanical control, such as narrow air jets, flows or the like, for intensifying the desired action, if necessary.

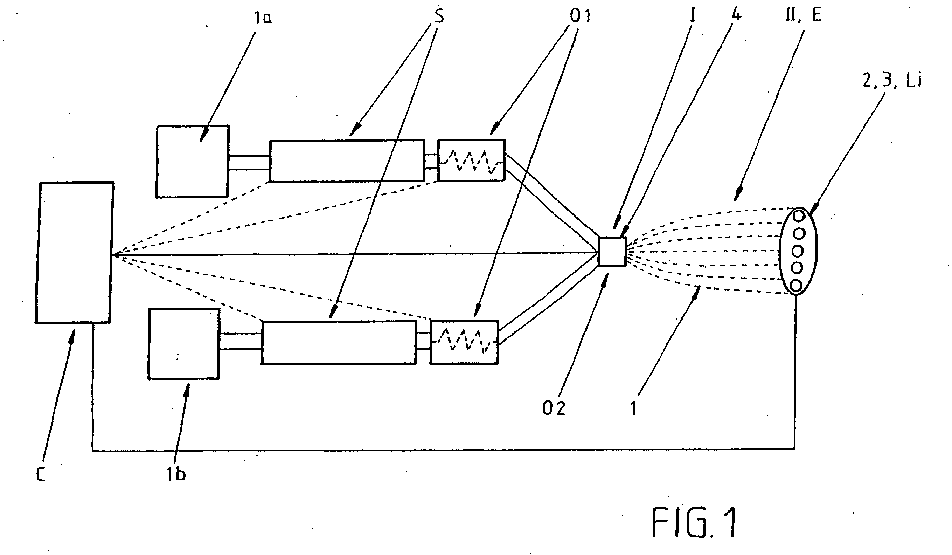

Furthermore, particularly in reference to the operating principle illustrated in fig. 1, e.g. multi-component ingredients 1a, 1b pressurized with cylinders S are first heated by a heating unit 01, whereafter such materials are mixed 02 together by means of a spraying unit 4, such as a spray bell or the like, charged electrically I, and delivered as a material spray II.

Unlike the prior art solutions, the apparatus operating in accordance with the above-described method comprises a mould 2/target 3 to be particularly set at an electrical potential and provided, e.g. on the principle depicted in fig. 2, with several treatment blocks Li to be set at voltage levels different from each other. Furthermore, in a preferred embodiment, the apparatus includes, according to the basic sketch 1, a control unit C for changing the voltage levels of one or more process parameters, such as the volume flow of a material to be sprayed, its viscosity and/or the like and/or an electrical field E, such as the charge of a material to be sprayed and/or the voltage levels of a mould 2/target 3.

It is possible to adapt the control unit C to operate statically, as described above, or, on the other hand, also dynamically, e.g. such that the voltage level of a given treatment block/blocks Li in the mould 2/target 3 changes continuously within predetermined minimum and maximum voltage levels during the course of spraying II.

Particularly in reference to the basic operating sketch shown in fig. 1, the apparatus comprises a heating unit 01 intended for heating basic ingredients 1a, 1b pressurized by means of cylinders S, and a processing unit 4, such as a spray bell or the like, for mixing 02 said materials together, for charging the same electrically I, and for producing a material spray II from the prepared manufacturing material 1.

It is obvious that the invention is not limited to the above-described or explained applications, but it can be subjected to major modifications within the scope defined by the appended claims. Thus, it is naturally clear that the method of the invention can be utilized e.g. in surface finishing or in the manufacture of certain type of pieces in such a manner that, directly after the spraying cycle, the piece constitutes a finished end product after removing/separating the same from the mould. Especially in view of this type of applications, the present invention is particularly applicable in a type of operation disclosed in the Applicant's co-pending patent application "Method and apparatus for manufacturing a thin-walled article". Moreover, it is naturally obvious that the method and apparatus of the invention can be used for manufacturing rigid three-dimensional products/coatings as well as naturally also similar elastic products. In practical processing, the voltage level of the apparatus can be chosen to serve any given purpose the best possible way but, in principle, the type of equipment tested by the Applicant with a maximum voltage of about 100 kV is capable of achieving a sufficiently good end result in many different processes. Of course, it is also possible to carry out processing by using two or more spraying units e.g. facing each other and/or by moving the mould continuously or periodically during the spraying cycle.

## Claims

1. A method for electrically controlling a flow of material, wherein a single- or multi-component, essentially polymer-based material (1), such as plastics, elastomer or the like, is charged electrically (I) and sprayed (II) in an electrical field (E) to a three-dimensional mould (2)/target (3), **characterized in, that** the method makes use of the mould (2)/target (3) set at an electric potential, which is provided with two or more treatment blocks (Li) to be set at voltage levels different from each other, especially for coordinating the courses of sprayed material particles and the electrical field (E) affecting the same, in such a manner that a material layer of desirable thickness is formed on each section/area of the mould/target surface in the spraying cycle (II).

2. A method as set forth in claim 1, **characterized in, that** the process is carried out in a static electrical field, such that the predetermined unequal voltage levels in the separate treatment blocks (Li) of the mould (2)/target (3) are maintained substantially constant through the entire spraying cycle (II).

3. A method as set forth in claim 1 or 2, **characterized in, that** the process is carried out in a dynamic electrical field by changing, during the course of spraying (II), one or more process parameters, such as the volume flow, viscosity, and/or the like of a material to be sprayed, and/or the electrical field (E), such as the charge of a material to be sprayed and/or the voltage levels in the treatment blocks (Li) of the mould (2)/target (3).

4. A method as set forth in claim 3, **characterized in, that** the process is carried out dynamically in such a manner that the voltage level in one or more treatment blocks (Li) of the mould (2)/target (3) is changed during the course of spraying (II) within the limits of predetermined minimum and maximum voltage levels.

5. A method as set forth in any of the preceding claims 1-4, **characterized in, that** the control over material particles to be sprayed is effected by using mechanical control, such as narrow air jets, flows or the like.

6. A method as set forth in any of the preceding claims 1-5, **characterized in, that** the manufacturing material (1) is heated by means of a heating unit (01), whereafter ingredients (1a, 1b) of the multi-component manufacturing material are mixed with each other (02), the manufacturing material (1) is charged electrically (I) and produced as a material spray (II) by means of a processing unit (4), such as a spray bell or the like.

7. An apparatus for electrically controlling a flow of material, comprising means for charging electrically (I) a single- or multi-component, essentially polymer-based material (1), such as plastics, elastomer or the like, and for spraying (II) it in an electrical field (E) to a three-dimensional mould (2)/target (3), **characterized in, that** the apparatus comprises the mould (2)/target (3) to be set at an electric potential, which is provided with two or more treatment blocks (Li) which can be set at voltage levels different from each other, especially for coordinating the courses of sprayed material particles and the electrical field (E) affecting the same.

8. An apparatus as set forth in claim 7, **characterized in, that** said apparatus includes a control unit (C) for changing one or more process parameters, such as the volume flow, viscosity and/or the like of a material to be sprayed, and/or the electrical field (E), such as the charge of a material to be sprayed and/or the voltage levels in the treatment blocks (Li) of the mould (2)/target (3).

9. An apparatus as set forth in claim 8, **characterized in, that** the control unit (C) is adapted to change the voltage level in one or more treatment blocks (Li) of the mould (2)/target (3) during the course of spraying (II) within the limits of predetermined minimum and maximum voltage levels.

10. An apparatus as set forth in any of the preceding claims 7-9, **characterized in, that** said apparatus includes a heating unit (01) for heating the manufacturing material (1) and a processing unit (4), such as a spray bell or the like, for mixing with each other (02) material components (1a, 1b) of the multi-component manufacturing material, for charging the manufacturing material (1) electrically (I and for producing a material spray (II) therefrom.

## Patentansprüche

1. Verfahren zur elektrischen Steuerung eines Materialflusses, wobei ein aus einem oder mehreren Komponenten bestehendes im Wesentlichen auf Polymer basierendes Material (1), wie beispielsweise Kunststoff, Elastomer oder ähnliches, elektrisch aufgeladen (I) und in ein elektrisches Feld (E) in eine dreidimensionale Form (2) /ein dreidimensionales Ziel (3) gesprüht (II) wird, **dadurch gekennzeichnet, dass** sich das Verfahren eine Form (2)/ein Ziel (3) zu Nutze macht, die/das in einem elektrischen Potential angeordnet ist, und die/das mit zwei oder mehreren auf voneinander verschiedene Spannungsniveaus eingestellten Verarbeitungsblöcken (Li) versehen ist, insbesondere um die Bewegungsbahnen der zu sprühenden Materialpartikel und das dieselben beeinflussende elektrische Feld (E) zu koordinieren, in der Art und Weise, dass während der Sprühphase (II) eine Materialschicht in der gewünschten Stärke auf jedem Abschnitt/Bereich der Form-/ Zielfläche gebildet wird.

2. Verfahren nach Anspruch 1, **dadurch gekennzeichnet, dass** der Prozess in einem statischen elektrischen Feld so durchgeführt wird, dass die für die verschiedenen Verarbeitungsblöcke (Li) der Form (2)/des Ziels (3) im Voraus bestimmten unterschiedlichen Spannungsniveaus im gesamten Verlauf der Spritzphase (II) im Wesentlichen konstant gehalten werden.

3. Verfahren nach Anspruch 1 oder 2, **dadurch gekennzeichnet, dass** der Prozess in einem dynamischen elektrischen Feld durchgeführt wird, indem im Verlauf der Sprühphase (II) ein oder mehrere Prozessparameter eines zu sprühenden Materials, wie beispielsweise der Volumenfluss, die Viskosität und/oder ähnliches, oder des elektrischen Feldes (E), wie beispielsweise die Ladung des zu sprühenden Materials und/oder die Spannungsniveaus in den Verarbeitungsblöcken (Li) der Form (2) / des Ziels (3), verändert werden.

4. Verfahren nach Anspruch 3, **dadurch gekennzeichnet, dass** der Prozess dynamisch derart durchgeführt wird, dass das Spannungsniveau in einem oder mehreren Verarbeitungsblöcken (Li) der Form (2) / des Ziels (3) im Verlauf des Sprühens (II) innerhalb der Grenzwerte von im Voraus festgelegten minimalen und maximalen Spannungsniveaus verändert wird.

5. Verfahren nach einem der vorangehenden Ansprüche 1 bis 4, **dadurch gekennzeichnet, dass** das Steuern der zu sprühenden Materialpartikel durch eine mechanische Steuerung, wie beispielsweise schmale Luftstrahlen, -ströme oder ähnliches, beeinflusst wird.

6. Verfahren nach einem der vorangehenden Ansprüche 1 bis 5, **dadurch gekennzeichnet, dass** das Herstellungsmaterial (1) mittels einer Heizeinheit erhitzt wird (O1), wonach die Bestandteile (1a, 1b) des aus mehreren Komponenten bestehenden Herstellungsmaterials untereinander vermischt werden (02), das Herstellungsmaterial (1) elektrisch aufgeladen (I) und durch eine Verarbeitungseinheit (4), wie beispielsweise eine Sprühglocke oder ähnliches, in Materialspray umgeformt wird (II).

7. Vorrichtung zur elektrischen Steuerung eines Materialflusses, die Einrichtungen zum elektrischen Laden (I) eines aus einem oder mehreren Komponenten bestehenden, im Wesentlichen auf Polymer basierenden Materials (1), wie beispielsweise Kunststoff, Elastomer oder ähnliches, und zum Sprühen (II) desselben in einem elektrisches Feld (E) in eine dreidimensionale Form (2) /ein dreidimensionales Ziel (3) umfasst, **dadurch gekennzeichnet, dass** die Vorrichtung die Form (2) /das Ziel (3) umfasst, die/das in einem elektrischen Potential angeordnet ist, und die/das mit zwei oder mehreren Verarbeitungsblöcken (Li) versehen ist, die auf verschiedene Spannungsniveaus eingestellt werden können, insbesondere um die Bewegungsbahnen der zu sprühenden Materialpartikel und das dieselben beeinflussende elektrische Feld (E) zu koordinieren.

8. Vorrichtung nach Anspruch 7, **dadurch gekennzeichnet, dass** die genannte Vorrichtung eine Steuereinheit (C) umfasst, um einen oder mehrere Prozessparameter eines zu sprühenden Materials, wie beispielsweise der Volumenfluss, die Viskosität und/oder ähnliches, und/oder des elektrischen Feldes (E), wie beispielsweise die Ladung des zu sprühenden Materials und/oder die Spannungsniveaus in den Verarbeitungsblöcken (Li) der Form (2) / des Ziels (3), zu verändern.

9. Vorrichtung nach Anspruch 8, **dadurch gekennzeichnet, dass** die Steuereinheit (C) so eingerichtet ist, dass sie das Spannungsniveau in einem oder mehreren Verarbeitungsblöcken (Li) der Form (2) /des Ziels (3) im Verlauf des Sprühens (II) innerhalb der Grenzwerte von im Voraus festgelegten minimalen und maximalen Spannungsniveaus verändert.

10. Vorrichtung nach einem der vorangehenden Ansprüche 7 bis 9, **dadurch gekennzeichnet, dass** die genannte Vorrichtung eine Heizeinheit (O1) umfasst, um das Herstellungsmaterial (1) zu erhitzen, sowie eine Verarbeitungseinheit (4), wie beispielsweise eine Sprühglocke oder ähnliches, um die Materialbestandteile (1a, 1b) des aus mehreren Komponenten bestehenden Herstellungsmaterials untereinander zu vermischen (02), um das Herstellungsmaterial (1) elektrisch aufzuladen (I) und daraus ein Materialspray zu bilden (II).

## Revendications

1. Procédé de régulation électrique d'un flux de matériau selon lequel un matériau mono-composant ou multi-composants principalement à base de polymères (1), comme du plastique, de l'élastomère ou équivalent, est chargé électriquement (I) et pulvérisé (II) dans un champ électrique (E) vers un moule(2)/un objectif (3) tridimensionnel, **caractérisé en ce que** le procédé utilise le moule (2)/l'objectif (3) réglé à un potentiel électrique, équipé d'un ou plusieurs blocs de traitement (Li) à régler sur des niveaux de tension différents les uns des autres, en particulier pour coordonner le trajet des particules de matériau pulvérisées et le champ électrique (E) qui agit sur elles, d'une manière telle qu'une couche de matériau de l'épaisseur souhaitée se forme sur chaque partie/zone de la surface du moule/de l'objectif au cours du cycle de pulvérisation.

2. Procédé selon la spécification 1, **caractérisé en ce que** le processus se déroule dans un champ électrique statique tel que les niveaux de tension inégaux prédéfinis dans les blocs de traitement séparés (Li) du moule (2)/de l'objectif (3) sont maintenus essentiellement constants pendant toute la durée du cycle de pulvérisation.

3. Procédé selon la spécification 1 ou 2, **caractérisé en ce que** le processus se déroule dans un champ électrique dynamique par variation, au cours de la pulvérisation (II), d'un ou plusieurs paramètres du processus comme le débit volumétrique, la viscosité ou équivalent d'un matériau à pulvériser et/ou le champ électrique (E), comme la charge d'un matériau à pulvériser et/ou les niveaux de tension dans les blocs de traitement (Li) du moule (2)/de l'objectif (3).

4. Procédé selon la spécification 3, **caractérisé en ce que** le processus se déroule dynamiquement d'une manière telle que le niveau de tension dans un ou plusieurs blocs de traitement (Li) du moule (2)/de l'objectif (3) varie au cours de la pulvérisation (II) dans les limites des niveaux de tension minimaux et maximaux prédéfinis.

5. Procédé selon selon l'une quelconque des revendications 1 à 4, **caractérisé en ce que** la régulation des particules de matériau à pulvériser est assurée par un moyen mécanique, comme des jets d'air ou des flux étroits ou équivalent.

6. Procédé selon selon l'une quelconque des revendications précédentes 1 à 5, **caractérisé en ce que** le matériau (1) est chauffé à l'aide d'un mécanisme de chauffage (01) et, une fois que les composants (1a, 1b) du matériau multi-composants sont mélangés entre eux (02), le matériau (1) est chargé électriquement (I) et est produit sous la forme d'un brouillard de matériau (II) à l'aide d'une unité de traitement (4) comme une cloche de pulvérisation ou équivalent.

7. Appareil de régulation électrique d'un flux de matériau comprenant des moyens pour charger électriquement (I) un matériau mono-composant ou multi-composants, principalement un matériau à base de polymères, comme du plastique, de l'élastomère ou équivalent, et pour le pulvériser (II) dans un champ électrique (E) vers un moule (2)/un objectif (3) tridimensionnel, **caractérisé en ce que** l'appareil comprend le moule (2)/l'objectif (3) à régler à un potentiel électrique, équipé de plusieurs blocs de traitement (Li), qui peuvent être réglés à des niveaux de tension différents, en particulier pour coordonner le trajet des particules de matériau pulvérisées et le champ électrique (E) qui agit sur elles.

8. Appareil selon la revendication 7, **caractérisé en ce que** ledit appareil comprend une unité de régulation (C) pour modifier un ou plusieurs paramètres du procédé comme le débit volumétrique, la viscosité ou équivalent d'un matériau à pulvériser et/ou le champ électrique (E), comme la charge d'un matériau à pulvériser et/ou les niveaux de tension dans les blocs de traitement (Li) du moule (2)/de l'objectif (3).

9. Appareil selon la revendication 8, **caractérisé en ce que** l'unité de régulation (C) est adaptée pour faire varier le niveau de tension dans un ou plusieurs blocs de traitement (Li) du moule (2)/de l'objectif (3) au cours de la pulvérisation (II) dans les limites des niveaux de tension minimaux et maximaux prédéfinis.

10. Appareil selon selon l'une quelconque des revendications précédentes 7 à 9, **caractérisé en ce que** ledit appareil comprend un mécanisme de chauffage (01) pour chauffer le matériau (1) et une unité de traitement (4) comme une cloche de pulvérisation ou équivalent, pour mélanger entre eux (02) les composants du matériau (1a, 1b) du matériau multi-composants, pour charger électriquement (I) le matériau (1) et pour produire un brouillard de matériau (II) à partir de ce matériau.
